# EUROPEAN PATENT APPLICATION

(11) **EP 4 464 926 A1**
(43) Date of publication of application: **20.11.2024**
(21) Application number: 22920355.9
(22) Date of filing: 31.03.2022
(51) Int. Cl.: F17C 1/12, F17C 1/16

(54) **METHOD FOR MANUFACTUREING LIQUIFIED GAS CONTAINER AND LIQUIFIED GAS CONTAINER**

(30) Priority: 11.01.2022 JP 2022002616
(71) Applicant: Space Walker, Inc., Tokyo, 105-0004 (JP)
(72) Inventor: YAMAMOTO, Mutsuya, Kure-shi, Hiroshima 737-0141 (JP); YONEMOTO, Koichi, Tokyo 105-0004 (JP)
(74) Representative: Berggren Oy
(86) International application number: PCT/JP2022/016921
(87) International publication number: WO 2023/135830

(57) **Abstract**

A liquefied gas container manufacturing method comprises: a first mold release film forming step of forming a first mold release film on an outer surface of an inner container that has a boss; an outer mandrel layer forming step of forming, on an outer side of the first mold release film, an outer mandrel layer made of a resin dissolvable by a solvent; a second mold release film forming step of forming a second mold release film on an outer surface of the outer mandrel layer; an outer container forming step of providing, on an outer side of the second mold release film, an outer fiber-reinforced resin layer so as to join the outer fiber-reinforced resin layer to a support member provided on the boss; and an outer mandrel layer dissolving step of dissolving and removing, by the solvent, the outer mandrel layer.

## Description

### TECHNICAL FIELD

The present disclosure relates to a liquefied gas container manufacturing method and a liquefied gas container.

### BACKGROUND ART

Many types of gas containers for storing gas have been proposed (e.g., see JP-A No. 2013-227997).

### SUMMARY OF INVENTION

### Technical Problem

The gas container of JP-A No. 2013-227997 includes a container body formed of a fiber-reinforced resin, the inner surface of the container body is covered with a resin coating including a gas barrier layer, and a reduction in weight is achieved compared with containers made of metal.

Gas containers having this kind of structure are not suited for storing low-temperature liquefied gas because thermal insulation properties are not considered.

In consideration of the above circumstances, it is an object of the present disclosure to provide a liquefied gas container manufacturing method for manufacturing a liquefied gas container that is lightweight and has excellent thermal insulation properties and a liquefied gas container.

### Solution to Problem

A liquefied gas container manufacturing method of one aspect of the present disclosure comprises: a first mold release film forming step of forming a first mold release film on an outer surface of an inner container that has a boss; an outer mandrel layer forming step of forming, on an outer side of the first mold release film, an outer mandrel layer made of a resin dissolvable by a solvent; a second mold release film forming step of forming a second mold release film on an outer surface of the outer mandrel layer; an outer container forming step of providing, on an outer side of the second mold release film, an outer fiber-reinforced resin layer so as to join the outer fiber-reinforced resin layer to a support member provided on the boss; and an outer mandrel layer dissolving step of dissolving and removing, by the solvent, the outer mandrel layer.

A liquefied gas container of another aspect of the present disclosure comprises: an outer container that is made of a fiber-reinforced resin; an inner container that is disposed inside the outer container, has a gas barrier property, is formed of a fiber-reinforced resin, and stores a liquefied gas; a boss that is provided at the inner container and which is formed a mouth portion that allows the liquefied gas to enter and exit the inner container; and a support member that floats and supports the inner container relative to the outer container, thereby forming a vacuum insulating space between the inner container and the outer container. Advantageous Effects of Invention

As described above, according to the liquefied gas container manufacturing method of one aspect of the present disclosure, the method has the advantageous effect that it can efficiently manufacture a liquefied gas container that is lightweight and has excellent thermal insulation properties.

Furthermore, the liquefied gas container of another aspect of the present disclosure has the advantageous effects that is lightweight and has excellent thermal insulation properties and can be suitably used for storing liquefied gas.

### BRIEF DESCRIPTION OF DRAWINGS

FIG. 1 is a cross-sectional view taken along an axis showing a liquefied gas container pertaining to a first embodiment of the present disclosure.
FIG. 2 is a cross-sectional view taken along an axis showing a nozzle and a support member in an exploded state.
FIG. 3 is a plan view showing the support member.
FIG. 4A is an explanatory diagram showing a step for manufacturing a high-pressure gas container.
FIG. 4B is an explanatory diagram showing a step for manufacturing the high-pressure gas container.
FIG. 4C is an explanatory diagram showing a step for manufacturing the high-pressure gas container.
FIG. 4D is a cross-sectional view showing part of an inner mandrel and an inner container.
FIG. 5 is a cross-sectional view of the inner container showing a state in which the inner mandrel is being dissolved.
FIG. 6 is a side view showing the inner container on which a mold release film has been formed.
FIG. 7 is a cross-sectional view showing the inner container provided with an outer mandrel layer.
FIG. 8 is a side view showing the inner container on which a mold release film has been formed.
FIG. 9 is a side view showing an outer container formed on the outer side of the outer mandrel layer.
FIG. 10 is a cross-sectional view of the container showing a state in which the outer mandrel layer is being dissolved.
FIG. 11A is a cross-sectional view taken along an axis showing a liquefied gas container pertaining to a second embodiment.
FIG. 11B is a plan view of a baffle as viewed from an axial direction.
FIG. 12A is a cross-sectional view taken along an axis showing the liquefied gas container pertaining to the second embodiment partway through manufacture.
FIG. 12B is a plan view showing a variation of a spacer.
FIG. 12C is a plan view showing a variation of the spacer.
FIG. 12D is a plan view showing a variation of the spacer.
FIG. 13A is a cross-sectional view taken along an axis showing a liquefied gas container pertaining to a third embodiment.
FIG. 13B is a plan view of a baffle as viewed from an axial direction.
FIG. 14 is a cross-sectional view taken along an axis showing a liquefied gas container pertaining to a fourth embodiment.
FIG. 15 is a cross-sectional view perpendicular to the axis showing the liquefied gas container pertaining to the fourth embodiment.
FIG. 16 is a cross-sectional view perpendicular to the axis showing a liquefied gas container including a support member pertaining to another embodiment.

### DESCRIPTION OF EMBODIMENTS

### [First Embodiment]

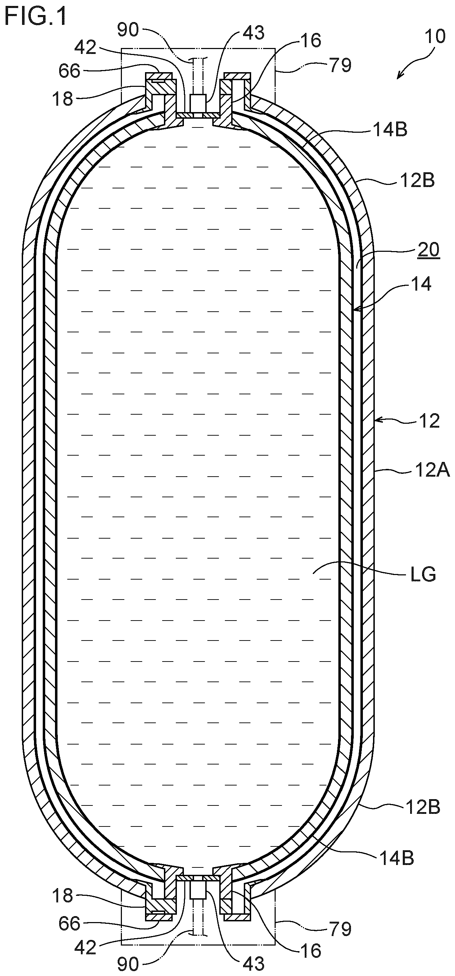

A liquefied gas container 10 pertaining to a first embodiment of the present disclosure will be described using FIG. 1 to FIG. 10.

### (Overall Configuration)

As shown in FIG. 1, the liquefied gas container 10 of the present embodiment is configured to include an outer container 12 that is made of a fiber-reinforced resin, an inner container 14 that is disposed inside the outer container 12, is capable of storing liquefied hydrogen LG serving as an example of a liquefied gas, and is made of a fiber-reinforced resin, a pair of bosses 16 that are provided on and allow the liquefied gas to be put into and taken out of the inner container 14, and a pair of support members 18 that float and support the inner container 14 relative to the outer container 12. Furthermore, between the inner container 14 and the outer container 12 of the liquefied gas container 10 is formed a vacuum insulating space 20.

### (Inner Container)

In the inner container 14 of the present embodiment, dome portions 14B are integrally formed on both end portions of a tube portion 14A formed in a fixed diameter, and the bosses 16 are provided in the centers of each of the dome portions 14B.

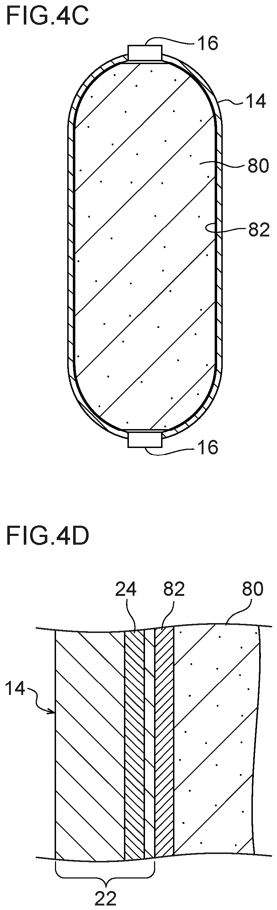

The inner container 14 of the present embodiment is, in one example, formed of carbon fiber-reinforced plastic (CFRP), and a gas barrier layer 24 is embedded inside a CFRP layer 22 as shown in FIG. 4D.

The CFRP layer 22 can, in one example, be formed by generally known filament winding methods or formed using a prepreg.

The matrix resin used in the CFRP layer 22 is not particularly limited. It will be noted that specific examples of the CFRP layer 22 can include thermosetting resins such as epoxy resins, unsaturated polyester resins, phenolic resins, vinyl ester resins, cyanate ester resins, urethane acrylate resins, phenoxy resins, alkyd resins, urethane resins, prepolymerized resins of maleimide resins and cyanate ester resins, bismaleimide resins, polyimide resins and polyimide resins and polyisoimide resins having acetylene terminals, and polyimide resins having nadic acid terminals. One type or a mixture of two or more types of these thermosetting resins can also be used. Among these, epoxy resins and vinyl ester resins, which have excellent heat resistance, elastic moduli, and chemical resistance, are particularly preferred. These thermosetting resins may include commonly used coloring agents and various additives in addition to curing agents and curing accelerators.

Furthermore, examples of thermoplastic resins in the matrix resin used in the present disclosure include one type or two or more types of resins selected from the group comprising polypropylene, polysulfone, polyethersulfone, polyetherketones, polyether ether ketone, aromatic polyamides, aromatic polyester, aromatic polycarbonates, polyphenylene sulfide, polyetherimide, polyarylene oxide, thermoplastic polyimide, polyamide-imides, polybutylene terephthalate, polyethylene terephthalate, polyethylene naphthalate, polyethylene, acrylonitrile butadiene styrene, and polylactic acid. Furthermore, depending on the application, these can also be mixed with a partially thermosetting resin and used. Among these, polyamide resins and acrylonitrile butadiene styrene (ABS) resin, which have excellent heat resistance, elastic moduli, and chemical resistance, are particularly preferred. These thermoplastic resins may include commonly used coloring agents and various additives.

The method of manufacturing the prepreg is not particularly limited, and known methods such as, for example, methods that impregnate a sheet-like carbon fiber-reinforced material with a molten thermoplastic resin (melt impregnation methods), methods that use a fluidized bed method or suspension method to apply and fuse a powderized thermoplastic resin, and methods that impregnate a fiber-reinforced material with a solution of a thermoplastic resin and thereafter remove the solvent can be employed. Preferred are melt impregnation methods, and among these is a method that superimposes and supplies a film-like resin and a fiber-reinforced material and continuously heats and presses them between belts to melt the resin and impregnate the reinforced fiber with the resin. These thermoplastic resins are used in a range of 10 mass % to 90 mass % and more preferably 20 mass % to 60 mass % as the resin content in the prepreg.

### (Gas Barrier Layer)

The gas barrier layer 24 of the present embodiment mainly comprises a clay layer. The basic configuration of the clay layer comprises a configuration where natural or synthetic swellable clay crystals having a thickness of about 1 nm, a particle diameter of about 1 µm, and an aspect ratio of about 300 or organo-modified clay crystals obtained by subjecting swellable clay to an organic modification process are equal to or greater than about 70 mass % and natural or synthetic low-molecular-weight or high-molecular-weight organic additives having a molecular size equal to or less than several nm are equal to or less than about 30 mass %. The organic modification process here means a silylation process or an organic ion exchange process, and in the present embodiment products obtained in this way shall also be included among clay minerals.

The clay layer is fabricated by orienting layered crystals in the same direction and densely layering them on top of each other. The obtained clay layer has a clay layer film thickness of 3 µm to 100 µm, and its gas barrier performance is such that the oxygen transmission rate is less than 0.1 cc/m²/24 hr/atm and the hydrogen transmission rate is less than 0.1 cc/m²/24 hr/atm at a clay layer thickness of 30 µm. Furthermore, the area of the obtained clay layer can be enlarged to equal to or greater than 100 × 40 cm, and with respect to this clay layer, DC electrical resistance in the vertical direction is equal to or greater than 1 MΩ.

As the clay, natural or synthetic clay, preferably either natural smectite or synthetic smectite, or an organo-modified clay or a mixture of these is used, and this is added to a solvent to prepare a dilute and uniform dispersion. As the clay, one or more types in the group comprising mica, vermiculite, montmorillonite, ferrous montmorillonite, beidellite, saponite, hectorite, stevensite, and nontronite can be used. The concentration of the clay dispersion is preferably 0.5 mass % to 15 mass % and more preferably 1 mass % to 10 mass %.

Next, a solid or liquid organic additive is added to the clay dispersion to prepare a uniform dispersion. The organic additive is not particularly limited as long as it is an organic additive that uniformly mixes with the clay to improve the flexibility or mechanical strength of an adhesive clay film; for example, low-molecular-weight compounds such as ethylene glycol and glycerin, natural products such as dextrin, starch, gelatin, agar, wheat flour, and gluten, and thermosetting or thermoplastic resins used as a matrix resin described later can be used. In particular, alkyd resins, polyurethane resins, epoxy resins, fluororesins, acrylic resins, methacrylic resins, phenolic resins, polyamide resins, polyester resins, polyimide resins, polyvinyl resins, and silicon resins are preferred. The ratio at which the organic additive is added is 3 mass % to 30 mass % and preferably 4 mass % to 20 mass % relative to the clay minerals. The order in which the clay dispersion and the organic additive are mixed can be such that the organic additive is added after adding the clay to the solvent or vice versa. Furthermore, it is also possible to separately prepare the clay dispersion and an organic additive solution and then mix them.

As a method of preparing the clay layer, for example, a liquid that is a dispersion liquid may be slowly evaporated on a substrate (the CFRP layer 22) to form a film. Drying is performed for example under temperature conditions of 30 °C to 100 °C and preferably under temperature conditions of 30 °C to 50 °C in a forced-air oven for about 10 minutes to half a day and preferably 10 minutes to 5 hours to obtain the clay layer.

### (Outer Container)

As shown in FIG. 1, the outer container 12 is disposed on the outer side of the inner container 14 with a spacing between them. The outer container 12 is, in one example, formed of the same CFRP as the inner container 14 but it is not provided with the gas barrier layer 24.

### (Boss)

The bosses 16 are provided on both lengthwise direction end sides of the inner container 14. Because the boss 16 on the lower side of the drawing and the boss 16 on the upper side of the drawing have identical configurations as shown in FIG. 1, the boss 16 on the upper side will be representatively described.

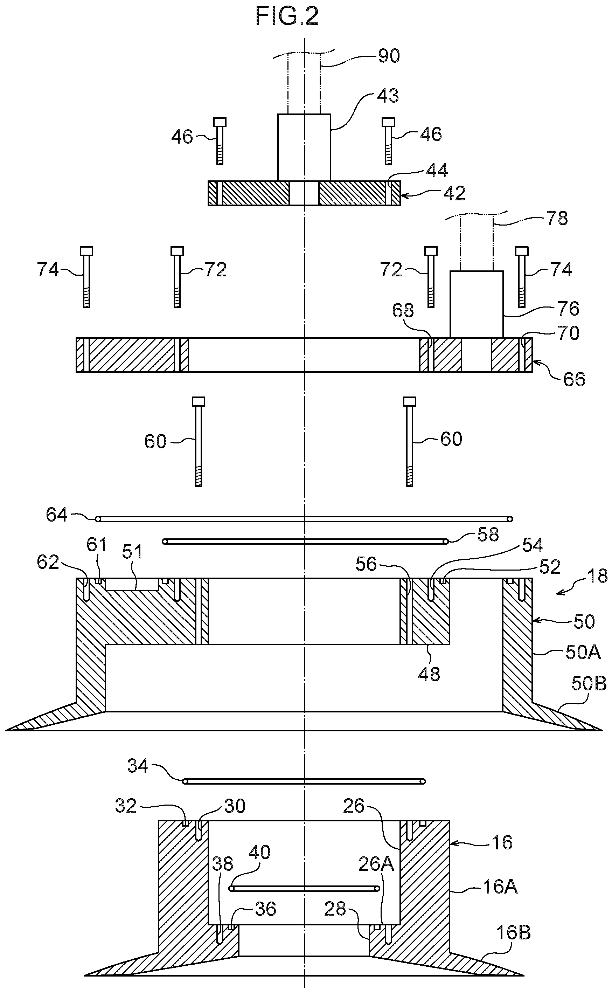

As shown in FIG. 1 and FIG. 2, the boss 16 of the present embodiment is, in one example, formed of aluminum or an aluminum alloy in a ring shape. The boss 16 includes a body portion 16A with a fixed outer diameter, and integrally formed on the end portion of the body portion 16A on the inner container side is an outer flange 16B that is curved along the shape of the inner surface of the dome portion 14B of the inner container 14.

The CFRP layer 22 of the inner container is adhered to the outer peripheral surface of the body portion 16A and to the outer flange 16B. It will be noted that the outer flange 16B is provided as needed and may be omitted.

In the body portion 16A is formed a large diameter hole 26, and in a bottom portion 26A of the large diameter hole 26 is formed a small diameter hole 28 serving as an example of a mouth portion.

In the upper end (the end portion on the opposite side of the inner container side) of the body portion 16A, plural screw holes 30 for attaching a later-described support member 18 are formed evenly spaced apart from each other in the circumferential direction on the inner peripheral side.

In the upper end of the body portion 16A, an O-ring groove 32 is formed on the outer peripheral side of the screw holes 30. In the O-ring groove 32 is fitted an O-ring 34. As the O-ring 34, a known cryogenic O-ring with which sealability is obtained even at low temperatures such as the temperature of liquefied hydrogen is used.

In the annular bottom portion 26A of the large diameter hole 26, an O-ring groove 36 is formed on the inner peripheral side, and plural screw holes 38 are formed evenly spaced apart from each other in the circumferential direction on the outer peripheral side of the O-ring groove 36. In the O-ring groove 36 is fitted an O-ring 40.

Inside the large diameter hole 26 is disposed a disc-shaped inner cover 42 configured by aluminum or an aluminum alloy. In the center of the inner cover 42 is attached a connector 43 for connecting a later-described hose 90, and on the outer peripheral side of the inner cover 42, through holes 44 are formed in positions opposing the screw holes 38 of the boss 16.

The inner cover 42 is secured to the boss 16 by fastening bolts 46 passed through the through holes 44 to the screw holes 38 of the boss 16, and the inner cover 42 closes off the small diameter hole 28. Furthermore, the gap between the inner cover 42 and the bottom portion 26A of the large diameter hole 26 is sealed by the O-ring 40.

### (Support Member)

Next, a support member 18 attached to the boss 16 will be described.

The support member 18 of the present embodiment is, in one example, formed of aluminum or an aluminum alloy in a ring shape.

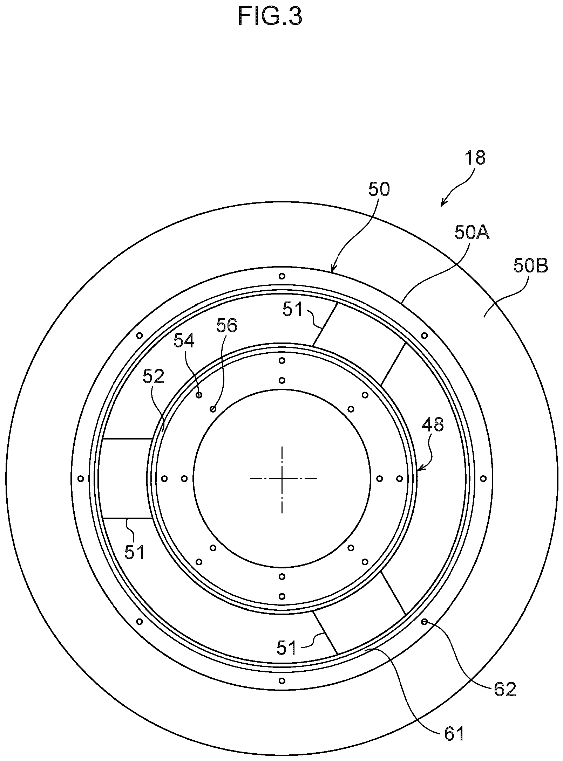

As shown in FIG. 2 and FIG. 3, the support member 18 includes an inner ring 48 that connects to the boss 16, an outer ring 50 that is provided on the outer side of the inner ring 48 and is attached to the outer container 12, and coupling portions 51 that intercouple the inner ring 48 and the outer ring 50.

The coupling portions 51 of the present embodiment are, as shown in FIGS. 2 and 3, formed in wide and thick columnar shapes and provided in three places evenly spaced apart from each other in the circumferential direction, but the shape and number of the coupling portions 51 can be changed as needed. Arc-shaped open portions between the coupling portions 51 serve as inlets for pouring a solvent for dissolving an outer mandrel layer 86 made of polystyrene foam described later and outlets for discharging the solvent after it has dissolved the polystyrene foam.

In the upper surface of the inner ring 48, an O-ring groove 52 is formed on the outer peripheral side, plural screw holes 54 are formed evenly spaced apart from each other in the circumferential direction on the inner peripheral side of the O-ring groove 52, and plural through holes 56 are formed evenly spaced apart from each other in the circumferential direction on the inner peripheral side of the screw holes 54. In the O-ring groove 52 is fitted an O-ring 58.

The inner ring 48 is disposed on the upper surface of the boss 16, and the inner ring 48 is secured to the boss 16 by fastening bolts 60 passed through the through holes 56 of the inner ring 48 to the screw holes 30 formed in the upper end of the boss 16. The gap between the inner ring 48 and the boss 16 is sealed by the O-ring 34.

The outer ring 50 includes a body portion 50A with a fixed outer diameter, and on the lower end (the outer container side) of the body portion 50A is formed an outer flange 50B that is curved along a dome portion 12B of the outer container 12. The outer container 12 is adhered to the outer peripheral surface of the body portion 50A and to the outer flange 50B. It will be noted that the outer flange 50B is provided as needed and may be omitted.

In the upper end of the outer ring 50, an O-ring groove 61 is formed on the inner peripheral side, and plural screw holes 62 are formed evenly spaced apart from each other in the circumferential direction on the outer peripheral side of the O-ring groove 61. In the O-ring groove 61 is fitted an O-ring 64.

The upper end of the inner ring 48 and the upper end of the outer ring 50 lie in the same plane, and on the upper portions of these is disposed a ring-shaped outer cover 66 configured in one example by aluminum or an aluminum alloy.

In the outer cover 66, through holes 68 are formed in positions opposing the screw holes 54 of the inner ring 48, and through holes 70 are formed in positions opposing the screw holes 62 of the outer ring 50.

The outer cover 66 is secured to the support member 18 by fastening bolts 72 passed the through holes 68 of the outer cover 66 to the screw holes 54 of the inner ring 48 and fastening bolts 74 passed the through holes 70 of the outer cover 66 to the screw holes 62 of the outer ring 50. Furthermore, the gap between the outer cover 66 and the inner ring 48 is sealed by the O-ring 58, and the gap between the outer cover 66 and the outer ring 50 is sealed by the O-ring 64.

To the outer cover 66 is attached a connector 76 serving as an example of a suction port.

To the connector 76 is detachably attached a hose 78 connected to a vacuum pump (not shown in the drawings), and the connector 76 has a built-in check valve (not shown in the drawings) inside. The check valve switches to an open state when sucking air in the space between the inner container 14 and the outer container 12 to the outer side of the container, and is configured to obstruct flow of air attempting to go into that space from outer side the container. It will be noted that an on/off valve may be provided instead of the check valve.

It will be noted that in the liquefied gas container 10 of the present embodiment, the boss 16 and the support member 18 may be covered with an insulating material 79 that is inorganic fiber-based, such as glass wool or rock wool, or foam resin-based, such as polystyrene foam, urethane foam, phenolic foam, and polystyrene foam. In the liquefied gas container 10 of the present embodiment, the type of the insulating material 79 is not particularly limited.

By covering the boss 16 and the support member 18 with the insulating material 79, outer side heat is inhibited from being transmitted to the support member 18 and the boss 16, and outer side heat is inhibited from being transmitted via the support member 18 and the boss 16 to the liquefied hydrogen gas.

### (Liquefied Gas Container Manufacturing Method)

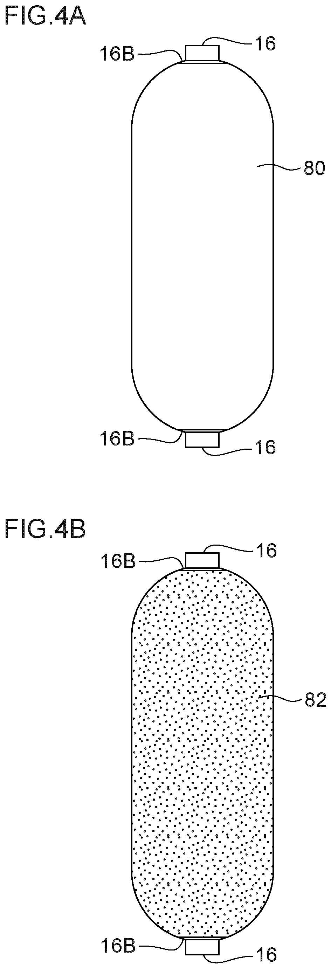

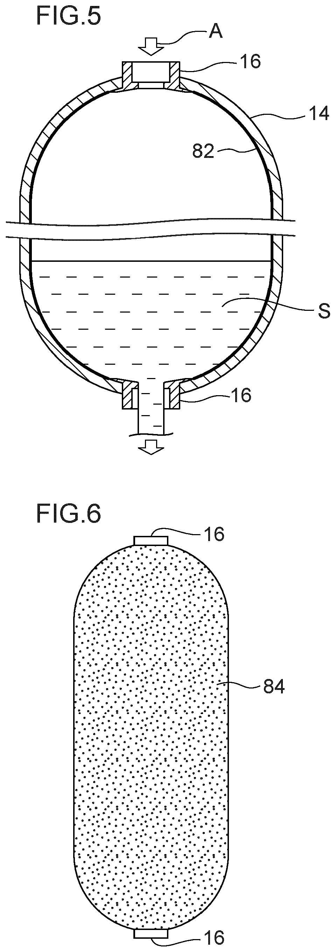

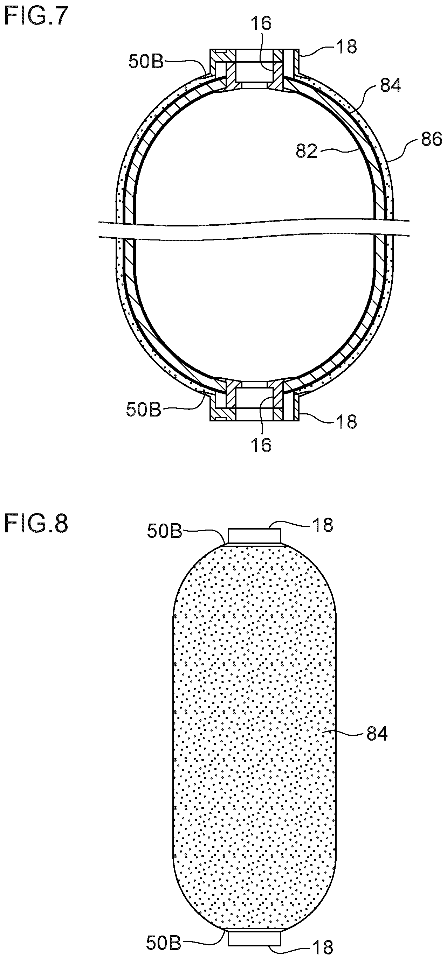

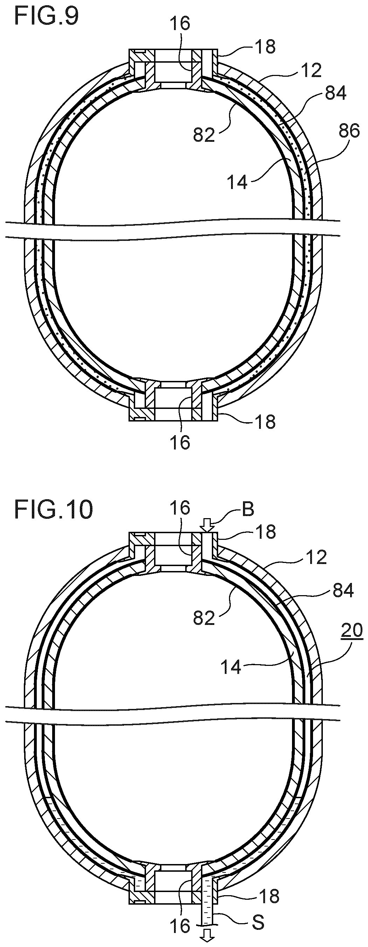

Next, steps (1) to (10) for manufacturing the liquefied gas container 10 of the present embodiment will be described in accordance with FIG. 4A to FIG. 10.
(1) As shown in FIG. 4A, a cylindrical inner mandrel 80 having a shape identical to that of the inside space of the inner container 14 is formed using polystyrene foam serving as an example of a dissolvable resin, and the bosses 16 are temporarily fixed with an adhesive or the like to both lengthwise direction ends thereof.
(2) As shown in FIG. 4B, a mold release agent for preventing the inner mandrel 80 and CFRP from becoming fixed to each other is applied to the surface of the inner mandrel 80, and the mold release agent is solidified to form a mold release film 82 on the surface of the inner mandrel 80. As the mold release agent, in one example, a silicone-based sealing material or Nitofix (product name of a cryogenic adhesive made by Axis Co., Ltd.) can be used. The mold release film 82 is an example of a third mold release film of the present disclosure.
(3) As shown in FIG. 4C and FIG. 4D, the inner container 14 is formed by sequentially forming an inner CFRP layer 22, the gas barrier layer 24, and an outer CFRP layer 22 so as to cover the surface of the mold release film 82 of the inner mandrel 80 and the outer flanges 16B of the bosses 16. It will be noted that in order to increase the strength of adhesion to the CFRP, it is preferred that the outer peripheral surfaces and the outer flanges 16B of the bosses 16 that the CFRP contacts be subjected to a known surface roughening treatment such as laser processing, sandblasting, or etching for example to form tiny irregularities in the surfaces to roughen the surfaces.
   As an adhesive used when adhering the outer flanges 16B and the CFRP to each other, in the present embodiment an adhesive whose adhesive strength is not reduced by the temperature of the liquefied hydrogen LG, or in other words an adhesive with which the required adhesive strength can be ensured at the temperature of the liquefied hydrogen LG, is selected and used.
(4) As shown in FIG. 5, the inner container 14 is disposed upright, a solvent (which may include a chemical for dissolving resin) for dissolving the polystyrene foam is poured through the boss 16 on the upper side into the inner container 14 to dissolve the inner mandrel 80, and the solvent S after it has melted the polystyrene foam is discharged to the outer side via the boss 16 on the lower side. Because of this, the hollow inner container 14 is completed.
   As the solvent S, known solvents such as acetone, styrene, toluene, benzine, and limonene for example can be appropriately selected and used.
(5) As shown in FIG. 6, a mold release agent is applied to the outer surface of the inner container 14, and the mold release agent is solidified to form a mold release film 84 on the outer surface of the inner container 14. The mold release film 84 is an example of a first mold release film of the present disclosure.
(6) As shown in FIG. 7, the support members 18 are attached to the bosses 16, and thereafter an outer mandrel layer 86 made of polystyrene foam and having a fixed thickness is formed so as to cover the mold release film 84 on the inner container 14. The outer mandrel layer 86 is formed in a shape identical to that of the vacuum insulating space 20.
(7) As shown in FIG. 8, a mold release agent for preventing the outer mandrel layer 86 and CFRP from becoming fixed to each other is applied to the surface of the outer mandrel layer 86, and the mold release agent is solidified to form a mold release film 88. The mold release film 88 is an example of a second mold release film of the present disclosure.
(8) As shown in FIG. 9, CFRP is formed so as to cover the surface of the mold release film 88 on the outer mandrel layer 86 and the outer flanges 50B of the support members 18. It will be noted that in order to increase the strength of adhesion with the CFRP, it is preferred that tiny irregularities be formed in the surfaces by laser processing for example on the outer flanges 50B of the support members 18 and the outer peripheral surfaces of the outer rings 50 of the support members 18 that the CFRP contacts.
(9) As shown in FIG. 10, a solvent for dissolving the polystyrene foam is poured through the gap between the inner ring 48 and the outer ring 50 of the support member 18 (see arrow B)) to dissolve the outer mandrel layer 86, and the solvent S in which the polystyrene foam is dissolved is discharged to the outer side via the gap between the inner ring 48 and the outer ring 50 of the support member 18 on the lower side. Because of this, a space that becomes the vacuum insulating space 20 is formed between the inner container 14 and the outer container 12.
(10) The inner covers 42 are attached to the bosses 16, the outer covers 66 are attached to the bosses 16 and the support members 18, thereafter the hoses 78 connected to the vacuum pump (not shown in the drawings) are connected to the connectors 76 of the outer covers 66, and the space between the inner container 14 and the outer container 12 is vacuumized so that that space can be made into the vacuum insulating space 20, whereby the liquefied gas container 10 is completed.

It will be noted that the bosses 16 and the support members 18 are covered with the insulating material 79 as needed.

### (Action and Effects)

In the liquefied gas container 10 of the present embodiment, in one example, by connecting the hose 90 to the connector 43 of the boss 16 on the upper side and connecting the hose 92 to the connector 43 of the boss 16 on the lower side, the liquefied hydrogen can be poured into the container through the hose 90 on the upper side, and the liquefied hydrogen in the container can be discharged through the hose 92 on the lower side.

In the liquefied gas container 10 of the present embodiment, the vacuum insulating space is provided between the inner container 14 and the outer container 12, so heat is less likely to be transmitted from the outer container 12 to the inner container 14, and the liquefied gas container 10 has a structure suitable for storing low-temperature liquefied gas, in one example liquefied hydrogen.

The inner container 14 and the outer container 12 are intercoupled by just the support members 18 and the bosses 16, and heat transmission paths via the materials of the inner container 14 and the outer container 12 are kept to a minimum, so high thermal insulation performance is obtained.

The inner container 14 and the outer container 12 are both formed of CFRP, which is a fiber-reinforced resin. Furthermore, no insulating material or the like is provided between the inner container 14 and the outer container 12. For this reason, the inner container 14 and the outer container 12 of the present embodiment can reduce the weight of the liquefied gas container 10 compared with a case where the inner container 14 and the outer container 12 are formed of metal or an insulating material is provided between the inner container 14 and the outer container 12.

In the liquefied gas container 10 of the present embodiment, transmission of the hydrogen gas can be inhibited by the gas barrier layer 24 sandwiched inside the CFRP layer 22 configuring the inner container 14, and the hydrogen gas can be inhibited from entering the vacuum insulating space 20 and lowering the degree of vacuum of the vacuum insulating space 20.

Furthermore, the liquefied hydrogen stored in the inner container 14 does not directly contact the gas barrier layer 24, so deterioration of and damage to the gas barrier layer 24 caused by contact with the liquefied hydrogen can be inhibited.

The gas barrier layer 24 of the present embodiment has a structure where clay minerals having a plate-like crystal structure are oriented in one direction and densely layered, so a gas barrier property equivalent to that in a case where it is formed of metal is obtained, and a reduction in weight can be achieved.

To the outer covers 66 are attached the connectors 76 that have built-in check valves. For this reason, if for some reason the degree of vacuum of the vacuum insulating space 20 decreases, the degree of vacuum of the vacuum insulating space 20 can be increased by connecting the vacuum pump via the hoses 78 to the connectors 76 and sucking out gas present in the vacuum insulating space.

### [Second Embodiment]

Next, a liquefied gas container 94 pertaining to a second embodiment of the present disclosure will be described. It will be noted that configurations that are the same as those of the first embodiment are assigned identical reference signs and description thereof will be omitted.

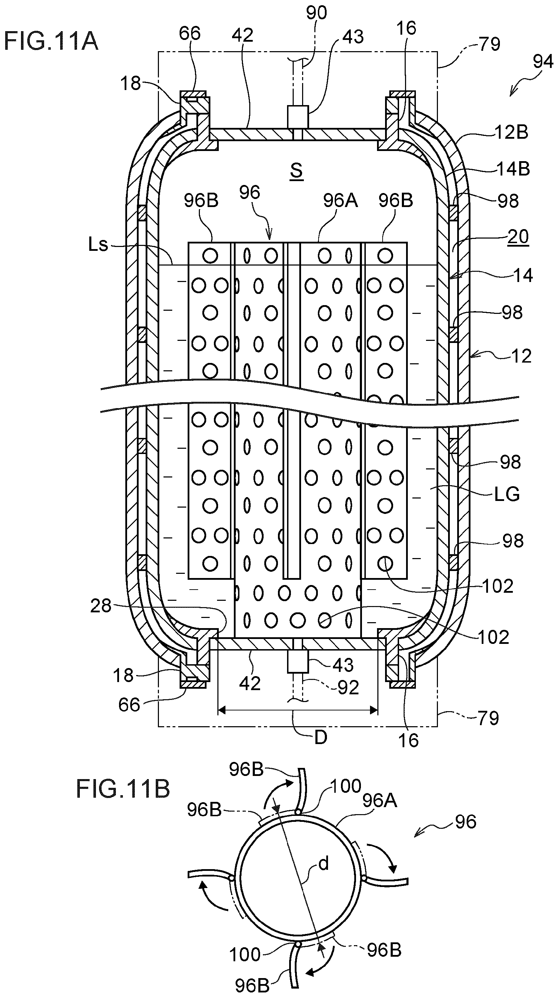

As shown in FIG. 11A and FIG. 11B, the liquefied gas container 94 of the present embodiment includes a baffle 96 inside which inhibits sloshing of the liquefied hydrogen LG.

It will be noted that configurations other than the baffle 96 of the liquefied gas container 94 of the present embodiment are basically the same as those of the liquefied gas container 10 of the first embodiment, but the liquefied gas container 94 is formed relatively large. In one example, in the liquefied gas container 94, the bosses 16 and the support members 18 can be configured to have large diameters relative to the outer container 12 and the inner container 14, and the small diameter holes 28 can be configured to have a large diameter like a manhole and formed in a size large enough for a worker to go inside.

As shown in FIG. 11A, in the liquefied gas container 94 of the present embodiment, ring-shaped spacers 98 are interposed between the inner container 14 and the outer container 12, and the inner container 14 is supported in the outer container 12 by the bosses 16, the support members 18, the outer covers 66, and the spacers 98. It will be noted that in FIG. 11A illustration of the mold release films is omitted.

The baffle 96 is attached to the inner cover 42 on the lower side. As shown in FIG. 11A and FIG. 11B, the baffle 96 includes a tubular body 96A, and plural blade portions 96B each formed in an arc shape as viewed from the axial direction are attached via hinges 100 to the outer peripheral surface of the body 96A. In each of the body 96A and the blade portions 96B, plural holes 102 are formed.

The blade portions 96B are curved in the same radius of curvature radius as the outer peripheral surface of the body 96A, and when inserting the baffle 96 inside the liquefied gas container 94, the blade portions 96B can be collapsed so as to be in contact with the outer peripheral surface of the body 96A as indicated by the long dashed double-short dashed lines.

As indicated the long dashed double-short dashed lines in FIG. 11B, a diameter d of the baffle 96 in a state in which the blade portions 96B are collapsed is smaller than an inner diameter D of the small diameter holes 28 of the bosses 16. Consequently, by collapsing the blade portions 96B, the baffle 96 can be inserted inside the inner container 14 via the small diameter holes 28 of the bosses 16.

After inserting the baffle 96 into the inner container 14, the blade portions 96B can be opened inside the inner container 14 as indicated by the solid lines in FIG. 11B. It will be noted that the blade portions 96B are secured to the body 96A by adhesion, welding, screws, or other means so that they do not move in the opened state.

As shown in FIG. 11A, in a case where there is a space (gas phase portion) S over a liquid surface Ls of the liquefied hydrogen LG, the liquid surface Ls may slosh when the liquefied gas container 94 is rocked during conveyance, but because the baffle 96 is provided inside the inner container 14 in the liquefied gas container 94 of the present embodiment, sloshing of the liquid surface Ls can be inhibited.

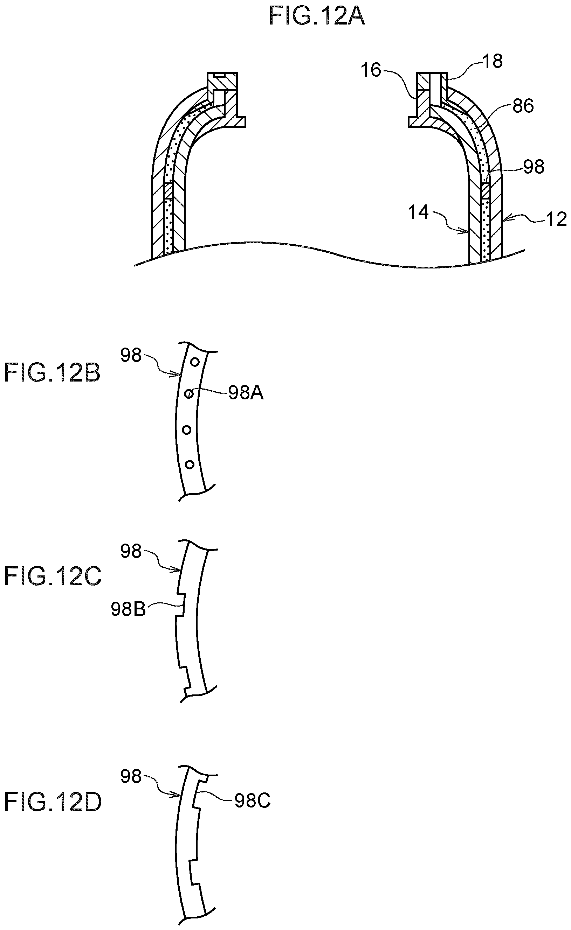

In manufacturing the liquefied gas container 94 of the present embodiment, as shown in FIG. 12A, the outer mandrel layer 86 is formed after attaching the spacers 98 to the outer side of the inner container 14. It will be noted that in order to allow the solvent that dissolves the outer mandrel layer 86 and the dissolved outer mandrel layer 86 to flow, plural holes 98A are formed in the spacers 98 as shown in FIG. 12B, or notches 98B are formed in the outer peripheries of the spacers 98 as shown in FIG. 12C, or notches 98C are formed in the inner peripheries of the spacers 98 as shown in FIG. 12D. It will be noted that although illustration is omitted, each of the spacers 98 may also be divided into plural sections in the circumferential direction.

### [Third Embodiment]

Next, a liquefied gas container 94 pertaining to a third embodiment of the present disclosure will be described. It will be noted that the present embodiment is an example modification of the second embodiment, so configurations that are identical to those of the second embodiment are assigned identical reference signs and description thereof will be omitted.

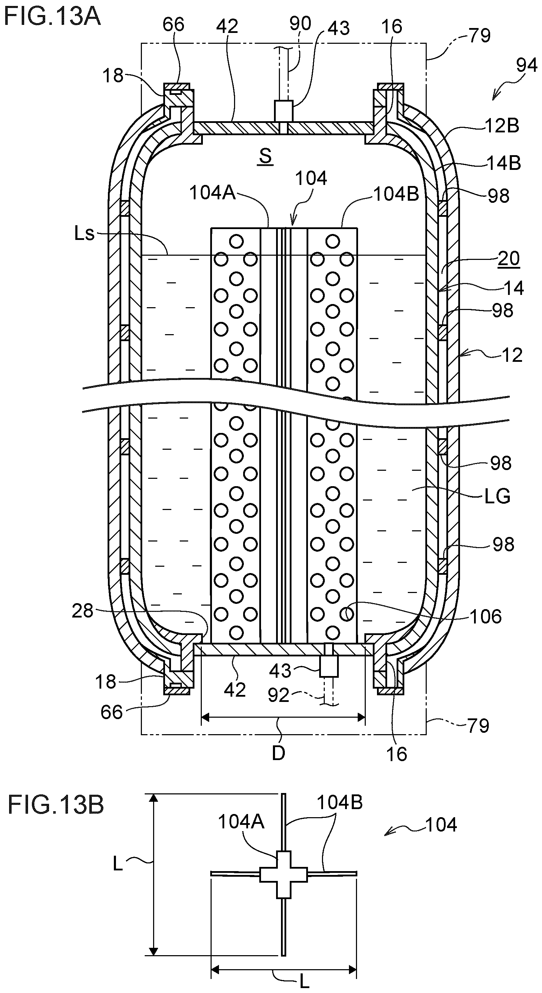

As shown in FIG. 13A and FIG. 13B, the liquefied gas container 94 of the present embodiment is provided with a baffle 104 whose shape is different from that of the second embodiment.

The baffle 104 includes a column 104A that has a cruciform cross-section and plural blade portions 104B that are secured to side portions of the column 104A.

A maximum width L of the baffle 104 is smaller than the inner diameter D of the small diameter holes 28 of the bosses 16. Consequently, the baffle 104 can be inserted inside the inner container 14 via the small diameter holes 28 of the bosses 16. It will be noted that in the blade portions 104B are formed plural holes 106.

The liquefied gas container 94 of the present embodiment is also provided with the baffle 104 inside the inner container 14, so sloshing of the liquid surface Ls can be inhibited.

It will be noted that in a case where the small diameter holes 28 of the bosses 16 are small, the column 104A and the blade portions 104B may be carried in a disassembled state inside the liquefied gas container 94 and then the blade portions 104B may be attached to the column 104A inside.

### [Fourth Embodiment]

Next, a liquefied gas container 94 pertaining to a fourth embodiment of the present disclosure will be described. It will be noted that the present embodiment is also an example modification of the second embodiment, so configurations that are identical to those of the second embodiment are assigned identical reference signs and description thereof will be omitted.

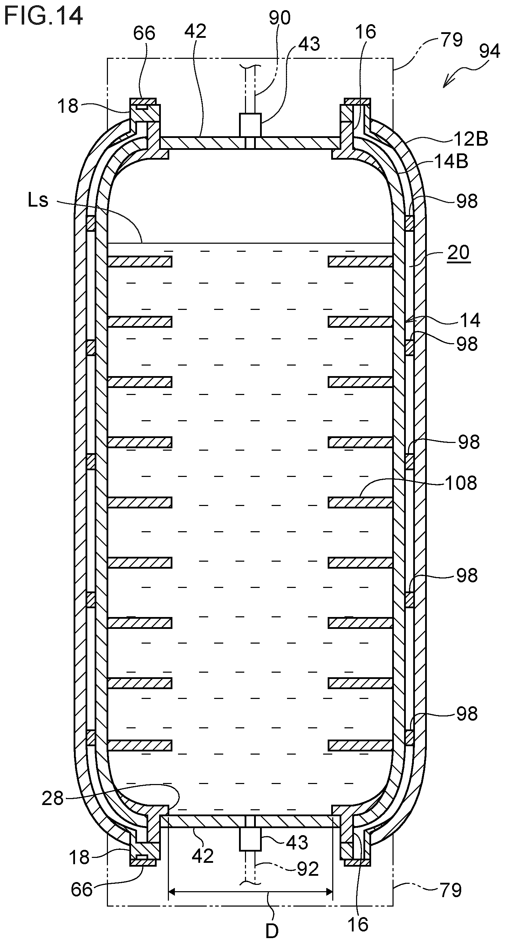

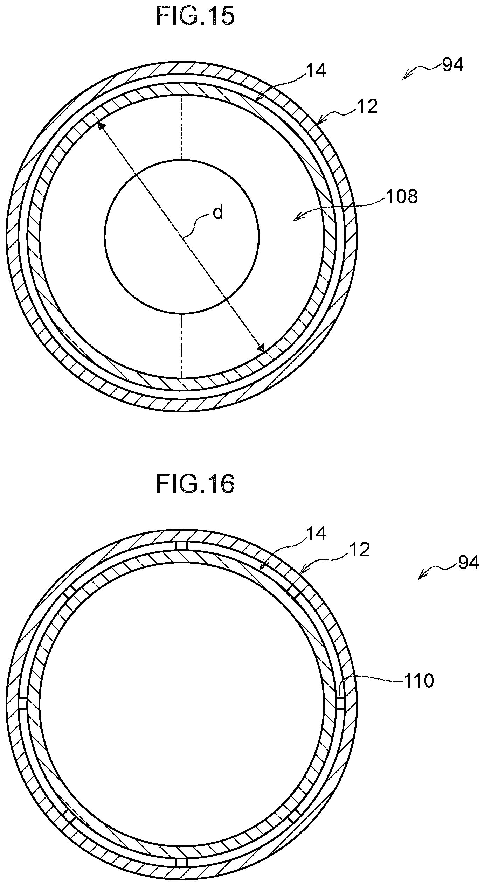

As shown in FIG. 14 and FIG. 15, in the liquefied gas container 94 of the present embodiment, plural ring baffles 108 are attached with a spacing between them in the axial direction to the inner peripheral surface of the inner container 14.

An outer diameter d of the ring baffles 108 of the present embodiment is larger than the inner diameter D of the small diameter holes 28 of the bosses 16. Consequently, before being inserted into the inner container 14, the ring baffles 108 are, in one example, in a bifurcated state (it will be noted that the number of divisions may also be three or more) as indicated by the long dashed double-short dashed lines in FIG. 15, and the ring baffles 108 divided so as to be insertable through the small diameter holes 28 are joined together in a ring shape inside the inner container 14 and are joined to the inner peripheral surface of the inner container 14.

The liquefied gas container 94 of the present embodiment is, in one example, of a size relatively large enough for a worker to go inside, and inside the liquefied gas container 94 the worker can assemble the divided ring baffles 108 to the inner container 14.

In the liquefied gas container 94 of the present embodiment, the ring baffles 108 are provided at the inner peripheral portion of the inner container 14, so sloshing of the liquid surface Ls can be inhibited.

It will be noted that although in the second embodiment to the fourth embodiment the outer periphery of the inner container 14 and the inner periphery of the outer container 12 are interconnected by the ring-shaped spacers 98 to support the inner container 14, the present disclosure is not limited thereto. As shown in FIG. 16, plural support members 110 having block-like shapes, such as cylindrical shapes for example, may interconnect the outer periphery of the inner container 14 and the inner periphery of the outer container 12 to support the inner container 14.

### [Other Embodiments]

Although embodiments of the present disclosure have been described above, the present disclosure is not limited to what is described above and can of course be modified and implemented in various ways other than described above without departing from the spirit thereof.

In the above embodiments, the inner mandrel 80 and the outer mandrel layer 86 were formed of polystyrene foam and the polystyrene foam was dissolved by a solvent, but the present disclosure is not limited thereto. The inner mandrel 80 and the outer mandrel layer 86 may be any material dissolved by a solvent, may be formed of a resin other than polystyrene, such as vinyl chloride, and need not be foamed so long as the material is easily dissolved by a solvent.

In the above embodiments, the liquefied gas container 10 is formed in a tubular shape, but the shape of the liquefied gas container 10 is not limited to being tubular and may be another shape such as spherical.

In the above embodiments, the bosses 16 and the support members 18 are provided on both end portions of the liquefied gas container 10 formed in a tubular shape, but the number of the bosses 16 and the support members 18 can be increased or decreased as needed (in accordance with use); the liquefied gas container 10 needs to have at least one of each and, depending on the case, may be provided with three or more of each.

In the above embodiments, the annular support members 18 are attached to the bosses 16 to float and support the inner container 14 relative to the outer container 12, but the present disclosure is not limited thereto. The shape of the support members 18 is not limited to being an annular shape. Furthermore, the support members 18 may be attached to sites other than the bosses 16 as long as the support members 18 can float and support the inner container 14 relative to the outer container 12, and the support members 18 may be directly attached to the inner container 14.

In the above embodiments, the bosses 16 and the support members 18 were configured by aluminum or an aluminum alloy, but the present disclosure is not limited thereto. As long as they are suitable for storing liquefied gas, the bosses 16 and the support members 18 may be configured by other metal materials or may be configured by non-metal materials such as ceramics or synthetic resins that have a lower thermal conductivity than metal materials.

In the above embodiments, CFRP (carbon fiber-reinforced plastic) is used as the fiber-reinforced resin, but known fiber-reinforced resins other than CFRP, such as glass fiber-reinforced plastic (GFRP) and aramid fiber-reinforced plastic (AFRP) for example, may be used as needed.

The liquefied gas container 10 is not limited to being used in a vertical attitude as shown in FIG. 1 and may be used horizontally or may be inclined and used. In a case where the liquefied gas container 10 having the structure shown in FIG. 1 is used horizontally or inclined, a hose that reaches the bottom of the container (the lowest portion inside the container) is disposed inside the container, and by connecting the hose to the connector 43, the liquefied gas inside the container can be sucked using the hose 92.

In a case where the liquefied gas container 10 is used in a horizontal or inclined attitude, it is preferred that both ends of the inner container 14 be dually supported relative to the outer container 12 as shown in FIG. 1 when storing a large amount of liquefied gas in the inner container 14.

In the above embodiments, after the inner mandrel 80 was dissolved the outer mandrel layer 86 was dissolved in a separate step, but the inner mandrel 80 may be dissolved in the same step (step (9) above) as the outer mandrel layer 86, and the order of the step of dissolving the inner mandrel 80 and the step of dissolving the outer mandrel layer 86 can be appropriately changed as needed.

The mold release film 82, the mold release film 84, and the mold release film 88 may be removed by a solvent when dissolving the mandrel.

In the above embodiments, the gas barrier layer 24 mainly comprised a clay layer, but the gas barrier layer 24 may be formed of a material other than clay, such as a synthetic resin or metal, as long as its gas barrier property is better than that of fiber-reinforced resin.

In the above embodiments, the inner container 14 was formed using the inner mandrel 80, but the inner container 14 may be formed by another method that does not use the inner mandrel 80.

In the above embodiments, the connectors 76 were attached to the outer covers 66, but the connectors 76 are provided as needed, and suction ports (holes) through which air can be sucked from the space between the outer container 12 and the inner container 14 may be formed in the outer covers 66. The suction ports (holes) formed in the outer covers 66 may be closed off after the air has been sucked.

The liquefied gas container 10 is not limited to storing liquefied hydrogen and can also store a liquefied gas other than liquefied hydrogen, such as liquefied helium, liquefied nitrogen, liquefied oxygen, and liquefied natural gas (LNG), and various liquids other than a liquefied gas.

The liquefied gas container 10 and the liquefied gas container 94 could, in one example, be anything from a relatively small container with a diameter and length of about several hundred millimeters to a relatively large container with a diameter and length of about several meters to several tens of meters.

Furthermore, in the case of the large liquefied gas container 94, it is preferred that the baffle 96, the baffle 104, the ring baffles 108, and the spacers 98 be used. Moreover, the outer container 12 and the inner container 14 may be provided with keel-shaped (rib-shaped) reinforcements extending in the axial direction as needed.

It will be noted that the following supplemental notes are also disclosed in relation to the above description.

### (Supplemental Note 1)

A liquefied gas container manufacturing method of supplemental note 1 comprises: a first mold release film forming step of forming a first mold release film on an outer surface of an inner container that has a boss; an outer mandrel layer forming step of forming on, on an outer side of the first mold release film an outer mandrel layer made of a resin dissolvable by a solvent; a second mold release film forming step of forming a second mold release film on an outer surface of the outer mandrel layer; an outer container forming step of providing, on an outer side of the second mold release film an outer fiber-reinforced resin layer so as to join the outer fiber-reinforced resin layer to a support member provided on the boss; and an outer mandrel layer dissolving step of dissolving and removing with the solvent the outer mandrel layer.

In the liquefied gas container manufacturing method of supplemental note 1, in the first mold release film forming step the first mold release film is formed on the outer surface of the inner container that has the boss.

In the outer mandrel layer forming step, the outer mandrel layer made of a resin dissolvable by a solvent is formed on an outer side of the first mold release film.

In the second mold release film forming step, the second mold release film is formed on the outer surface of the outer mandrel layer.

In the outer container forming step, the outer fiber-reinforced resin layer is provided on an outer side of the second mold release film so that it is joined to the support member provided on the boss. This outer fiber-reinforced resin layer becomes an outer container provided on the outer side of the inner container.

In the outer mandrel layer dissolving step, the outer mandrel layer is dissolved and removed with the solvent. Because of this, a space can be formed between the inner container and the outer container.

It will be noted that this space can be made into a vacuum insulating space by sucking the air inside it.

A liquefied gas container manufacturing method of supplemental note 2 is the liquefied gas container manufacturing method of supplemental note 1, including a vacuumizing step of vacuumizing a space between the inner container and the outer container.

In the liquefied gas container manufacturing method of supplemental note 2, in the vacuumizing step the space between the inner container and the outer container can be vacuumized, whereby the space between the inner container and the outer container can be made into a vacuum insulating space.

A liquefied gas container manufacturing method of supplemental note 3 is the liquefied gas container manufacturing method of supplemental note 1 or supplemental note 2, further comprising, as steps for forming the inner container, a third mold release film forming step of providing a boss, and forming a third mold release film, on an outer surface of an inner mandrel made of a resin dissolvable by a solvent, an inner container forming step of providing, on an outer surface of the third mold release film, an inner fiber-reinforced resin layer so as to join the inner fiber-reinforced resin layer to the boss, and an inner mandrel dissolving step of dissolving and removing, by the solvent, the inner mandrel.

In the liquefied gas container manufacturing method of supplemental note 3, in the third mold release film forming step the boss is provided and the third mold release film is formed on the outer surface of the inner mandrel made of a resin dissolvable by a solvent as a step for forming the inner container.

In the inner container forming step the inner fiber-reinforced resin layer is provided on the outer surface of the third mold release film so that it is joined to the boss. This inner fiber-reinforced resin layer becomes the inner container.

In the inner mandrel dissolving step the inner mandrel is dissolved and removed with the solvent. Because of this, the inner container whose inside has become hollow is formed.

A liquefied gas container manufacturing method of supplemental note 4 is the liquefied gas container manufacturing method of supplemental note 3, wherein the inner mandrel and the outer mandrel layer are formed of polystyrene foam.

In the liquefied gas container manufacturing method of supplemental note 4, the polystyrene foam can be quickly dissolved by a solvent compared with polystyrene that is not foamed. Furthermore, polystyrene is easily dissolved by a solvent compared with other synthetic resins. For this reason, the inner mandrel and the outer mandrel layer formed of polystyrene foam can be quickly dissolved and removed using a solvent, and the production efficiency of the liquefied gas container can be increased.

A liquefied gas container manufacturing method of supplemental note 5 is the liquefied gas container manufacturing method of any one of supplemental note 1 to supplemental note 4, wherein the outer container forming step includes a joining step of joining the support member to the boss.

In the liquefied gas container manufacturing method of supplemental note 5, the support member can be joined to the boss in the joining step of the outer container forming step.

A liquefied gas container of supplemental note 6 comprises: an outer container that is made of a fiber-reinforced resin; an inner container that is disposed inside the outer container, that has a gas barrier property, is formed of a fiber-reinforced resin, and that stores a liquefied gas; a boss that is provided at the inner container and at which is formed a mouth portion that allows the liquefied gas to enter and exit the inner container; and a support member that floats and supports the inner container relative to the outer container, thereby forming a vacuum insulating space between the inner container and the outer container.

In the liquefied gas container of supplemental note 6, liquefied gas can be stored in the inner container. The liquefied gas can be put inside the inner container via the mouth portion in the boss provided at the inner container, and the liquefied gas put into the inner container can be removed via the mouth portion.

The vacuum insulating space is provided between the inner container and the outer container, so heat is less likely to be transmitted from the outer container to the inner container, and the liquefied gas container has a structure suitable for storing low-temperature liquefied gas. The inner container and the outer container are intercoupled by just the support member, and heat transmission paths via the materials of the inner container and the outer container are kept to a minimum, so high thermal insulation performance is obtained.

Furthermore, the inner container and the outer container are both formed of a fiber-reinforced resin, and no insulating material or the like is provided between the inner container and the outer container, so the liquefied gas container can be reduced in weight compared with a case where the inner container and the outer container are formed of a metal or an insulating material is provided between the inner container and the outer container.

A liquefied gas container of supplemental note 7 is the liquefied gas container of supplemental note 6, wherein the support member is secured to the boss of the inner container and floats and supports the inner container relative to the outer container via the boss.

In the liquefied gas container of supplemental note 7, the load of the inner container is supported by the outer container via the boss and the support member.

A liquefied gas container of supplemental note 8 is the liquefied gas container of supplemental note 6 or supplemental note 7, wherein the support member includes a suction port leading to the vacuum insulating space.

In the liquefied gas container of supplemental note 8, by connecting a vacuum pump via a hose or the like to the suction port and sucking air present in the space between the inner container and the outer container, the space between the inner container and the outer container can be made into a vacuum insulating space.

A liquefied gas container of supplemental note 9 is the liquefied gas container of any one of supplemental note 6 to supplemental note 8, wherein the inner container has a gas barrier layer sandwiched inside the fiber-reinforced resin.

In the liquefied gas container of supplemental note 9, the transmission of gas resulting from vaporization of the liquefied gas can be inhibited by the gas barrier layer sandwiched inside the fiber-reinforced resin, and gas can be inhibited from entering the vacuum insulating space and lowering the degree of vacuum of the vacuum insulating space.

Furthermore, the liquefied gas does not directly contact the gas barrier layer, so deterioration of and damage to the gas barrier layer caused by contact with the liquefied gas can be inhibited.

A liquefied gas container of supplemental note 10 is the liquefied gas container of supplemental note 9, wherein the gas barrier layer comprises clay minerals having a plate-like crystal structure that are oriented in one direction and densely layered.

In the liquefied gas container of supplemental note 10, the gas barrier layer has a structure where clay minerals having a plate-like crystal structure are oriented in one direction and densely layered, so a gas barrier property equivalent to that in a case where it is formed of metal is obtained for the gas barrier layer, and a reduction in weight can be achieved.

A liquefied gas container of supplemental note 11 is the liquefied gas container of any one of supplemental note 6 to supplemental note 10, wherein the inner container stores liquefied hydrogen.

In the liquefied gas container of supplemental note 11, liquefied hydrogen can be stored in the inner container.

The disclosure of Japanese Patent Application No. 2022-002616 filed on January 11, 2022, is incorporated in its entirety by reference herein.

All documents, patent applications, and technical standards mentioned in this specification are incorporated herein by reference to the same extent as if each individual document, patent application, or technical standard were specifically and individually indicated to be incorporated by reference.

## Claims

1. A liquefied gas container manufacturing method, comprising:
a first mold release film forming step of forming a first mold release film on an outer surface of an inner container that has a boss;
an outer mandrel layer forming step of forming, on an outer side of the first mold release film, an outer mandrel layer made of a resin dissolvable by a solvent;
a second mold release film forming step of forming a second mold release film on an outer surface of the outer mandrel layer;
an outer container forming step of providing, on an outer side of the second mold release film, an outer fiber-reinforced resin layer so as to join the outer fiber-reinforced resin layer to a support member provided on the boss; and
an outer mandrel layer dissolving step of dissolving and removing, by the solvent, the outer mandrel layer.

2. The liquefied gas container manufacturing method of claim 1, including a vacuumizing step of vacuumizing a space between the inner container and the outer container.

3. The liquefied gas container manufacturing method of claim 1 or claim 2, further comprising, as steps for forming the inner container,
a third mold release film forming step of providing a boss, and forming a third mold release film, on an outer surface of an inner mandrel made of a resin dissolvable by a solvent,
an inner container forming step of providing, on an outer surface of the third mold release film, an inner fiber-reinforced resin layer so as to join the inner fiber-reinforced resin layer to the boss, and
an inner mandrel dissolving step of dissolving and removing, by the solvent, the inner mandrel.

4. The liquefied gas container manufacturing method of claim 3, wherein the inner mandrel and the outer mandrel layer are formed of polystyrene foam.

5. The liquefied gas container manufacturing method of any one of claim 1 to claim 4, wherein the outer container forming step includes a joining step of joining the support member to the boss.

6. A liquefied gas container, comprising:
an outer container that is made of a fiber-reinforced resin;
an inner container that is disposed inside the outer container, that has a gas barrier property, that is formed of a fiber-reinforced resin, and that stores a liquefied gas;
a boss that is provided at the inner container and at which is formed a mouth portion that allows the liquefied gas to enter and exit the inner container; and
a support member that floats and supports the inner container relative to the outer container, thereby forming a vacuum insulating space between the inner container and the outer container.

7. The liquefied gas container of claim 6, wherein the support member is secured to the boss of the inner container and floats and supports the inner container relative to the outer container via the boss.

8. The liquefied gas container of claim 6 or claim 7, wherein the support member includes a suction port leading to the vacuum insulating space.

9. The liquefied gas container of any one of claim 6 to claim 8, wherein the inner container has a gas barrier layer sandwiched inside the fiber-reinforced resin.

10. The liquefied gas container of claim 9, wherein the gas barrier layer comprises clay minerals having a plate-like crystal structure that are oriented in one direction and densely layered.

11. The liquefied gas container of any one of claim 6 to claim 10, wherein the inner container stores liquefied hydrogen.
